# EUROPEAN PATENT APPLICATION

(11) **EP 4 389 300 A1**
(43) Date of publication of application: **26.06.2024**
(21) Application number: 23206090.5
(22) Date of filing: 26.10.2023
(51) Int. Cl.: B05B 13/04, B05B 1/08, B05B 15/55, B05B 15/58, B41J 2/165, B25J 11/00, B05B 9/04

(54) **COATING MACHINE**

(30) Priority: 20.12.2022 JP 2022203395
(71) Applicant: ABB Schweiz AG, 5400 Baden (CH)
(72) Inventor: Yamauchi, Kuniharu, Tokyo, 1416022 (JP)
(74) Representative: Zimmermann & Partner Patentanwälte mbB

(57) **Abstract**

[Problem] To quickly and thoroughly flush out residual coating material remaining in a coating head.

[Solution] The coating machine of the present invention is a coating machine comprising an inkjet type coating head having an ejection surface on which a plurality of nozzles for ejecting coating material are provided, the coating machine comprising: a robot arm comprising a plurality of arm members at least including an arm member that holds the coating head; an arm control unit that controls the position and attitude of the coating head by driving the robot arm; a supply passage for supplying coating material to the coating head; a cleaning liquid supply unit which supplies cleaning liquid to the coating head via the supply passage; and a cleaning control unit which controls the cleaning liquid supply unit, wherein the arm control unit controls the driving of the robot arm during cleaning of the coating head so as to change the attitude of the coating head from a specified attitude to a tilted attitude in which the ejection surface is tilted relative to the horizontal plane, and the cleaning control unit drives the cleaning liquid supply unit to supply cleaning liquid to the supply passage in a state where the attitude of the cleaning head has been changed.

## Description

### [Technical field]

The present invention relates to a coating machine equipped with a coating head having multiple nozzles that spray out a coating material.

### [Background art]

The development of coating machines that use inkjet technology to coat the vehicle body of an automobile (hereinafter simply referred to as vehicle body) is progressing. A coating machine using inkjet technology includes a coating head that ejects a predetermined amount of droplets of coating material from each of a plurality of nozzles provided on the nozzle forming surface (ejection surface) towards the vehicle body, for example, by driving a piezo element or other piezoelectric device; a supply passage for supplying coating material to the coating head, etc.

In such coating machines, it is common to coat multiple vehicle bodies continuously. In addition, there may be cases where the coating material used is switched in the process of coating multiple vehicle bodies. In the process of coating multiple vehicle bodies, when switching between coating materials to be used, a so-called cleaning operation is performed, for example, by flushing the coating head and the supply passage that supplies the coating material to the coating head, for example, with a cleaning liquid which is a solution having the same main component as the coating material, so as to flush out the residual coating material (pigment) remaining therein (see Patent Document 1). Performing cleaning operations prevents the occurrence of residual coating material in the coating head and supply passage and color mixing with newly supplied coating material.

### [Prior art documents]

### [Patent documents]

[Patent Document 1] Japanese Unexamined Patent Application Publication 2020-501881

### [Summary of the invention]

### [Problem to be solved by the invention]

As described above, since coating with the coating machine is performed continuously on multiple vehicle bodies, the cleaning operation described above must be performed within a time period from the completion of coating of a vehicle body until the start of coating of the next vehicle body. The time from the completion of coating of a vehicle body until the start of coating of the next vehicle body is very short, from a few seconds to a few tens of seconds. The coating head used in the coating machine has a very complex structure in which flow passages are provided within the coating head to stably eject a predetermined amount of coating material droplets from each of the plurality of nozzles. Therefore, it is difficult to thoroughly flush out the residual coating material remaining in the interior of the coating head simply by passing cleaning liquid through the flow passages provided in the interior of the coating head. Therefore, there is a need for a technique that will make it possible to flush out the residual coating material that remains in the coating head quickly and thoroughly.

The present invention was invented to solve the problem described above and is intended to provide a coating machine capable of flushing out residual coating material remaining in the coating head quickly and thoroughly.

### [Means for solving the problem]

To solve the above problem, the coating machine of the present invention is a coating machine comprising an inkjet type coating head having an ejection surface on which a plurality of nozzles for ejecting coating material are provided, the coating machine being characterized in that it comprises: a robot arm comprising a plurality of arm members at least including an arm member that holds the coating head; an arm control unit that controls the position and attitude of the coating head by driving the robot arm; a supply passage for supplying coating material to the coating head; a cleaning liquid supply unit which supplies cleaning liquid to the coating head via the supply passage; and a cleaning control unit which controls the cleaning liquid supply unit, wherein the arm control unit controls the driving of the robot arm during cleaning of the coating head so as to change the attitude of the coating head from a specified attitude to a tilted attitude in which the ejection surface is tilted relative to the horizontal plane, and the cleaning control unit drives the cleaning liquid supply unit to supply cleaning liquid to the supply passage in a state where the attitude of the cleaning head has been changed.

In addition, there is a reservoir unit in which coating material is stored and a return flow passage for returning, to the reservoir unit, coating material supplied to the coating head that was not ejected from the plurality of nozzles, wherein the supply passage is provided on one end side in one direction of the ejection surface, wherein the return flow passage is provided on the other end side in one direction of the ejection surface, and wherein the arm control unit controls the driving of the robot arm to change the attitude of the coating head so as to tilt the ejection surface downward from one end side in one direction of the ejection surface towards the other end side.

Preferably, the arm control unit also controls the driving of the robot arm to maintain the attitude of the coating head in a state where the ejection surface of the coating head is tilted relative to the horizontal plane.

Preferably, the arm control unit also controls the driving of the robot arm to continuously change the angle at which the ejection surface of the coating head is tilted relative to the horizontal plane during cleaning of the coating head.

Preferably, at this time, the arm control unit controls the driving of the robot arm to rotate the coating head about a central axis extending in a first direction contained in a plane parallel to the horizontal plane, and to rotate the coating head about a central axis extending in a second direction contained in a plane parallel to the horizontal plane and orthogonal to the first direction, so as to continuously change the angle at which the ejection surface of the coating head is tilted relative to the horizontal plane.

In addition, there is provided a vibration imparting means that imparts vibration to the coating head, wherein the vibration control unit drives the vibration imparting means in response to the supply of cleaning liquid to the coating head being started.

In addition, there is a provided a state detection means disposed in the return flow passage for detecting the state of the cleaning liquid that has flowed through the coating head, and a condition setting unit that sets cleaning conditions, including the attitude of the coating head during cleaning of the coating head and the supply time of the cleaning liquid supplied to the coating head, based on the detection results of the state detection means.

### [Effect of the Invention]

According to the present invention, residual coating material remaining in the coating head can be flushed out quickly and thoroughly.

### [Brief description of the drawings]

[FIG. 1] FIG. 1 (a) is a plan view illustrating an example of a coating machine in which the present invention has been implemented; FIG. 1 (b) is a rear view of the coating machine shown in FIG. 1 (a).
[FIG. 2] FIG. 2 (a) is a front view of a coating head unit used in the coating machine shown in FIG. 1 (a), and FIG. 2 (b) is a side view, from the base side of the robot arm, of the coating head unit used in the coating machine shown in FIG. 1 (a).
[FIG. 3] FIG. 3 is a diagram illustrating one configuration of a coating material supply device used in the coating machine shown in FIG. 1.
[FIG. 4] FIG. 4 is a diagram showing a schematic configuration of supplying coating material to each nozzle in the coating head.
[FIG. 5] FIG. 5 is a cross-sectional view showing a modified example of the configuration of the vicinity of the row direction supply flow passage, nozzle pressurization chamber, and row direction evacuation flow passage shown in FIG. 4.
[FIG. 6] FIG. 6 is a cross-sectional view showing a modified example of the configuration of the vicinity of the row direction supply flow passage, nozzle pressurization chamber, and row direction evacuation flow passage shown in FIG. 5.
[FIG. 7] FIG. 7 is a diagram showing the configuration of the control system in the coating machine 10.
[FIG. 8] FIG. 8 (a) is a diagram showing the tilted attitude of the coating head unit tilted clockwise with the short direction of the nozzle forming surface of the coating head as the center of rotation and FIG. 8 (b) is a diagram showing the state of the coating head unit tilted counterclockwise with the short direction of the nozzle forming surface of the coating head as the center of rotation.
[FIG. 9] FIG. 9 (a) is a diagram showing a coating head unit in a reference attitude, and FIG. 9 (b) to FIG. 9 (d) are diagrams showing tilted attitudes of the coating head unit in which the coating head unit in the reference attitude has been tilted clockwise with the short direction of the nozzle forming surface of the coating head as the center of rotation, for example, by increments of 22.5°.
[FIG. 10] FIG. 10 (a) to FIG. 10 (c) are diagrams showing tilted attitudes of the coating head unit in which the coating head unit has been tilted counterclockwise with the short direction of the nozzle forming surface of the coating head as the center of rotation, for example, by increments of 22.5°.
[FIG. 11] FIG. 11 (a) is a diagram showing a tilted attitude of the coating head unit tilted clockwise with the long direction of the nozzle forming surface of the coating head as the center of rotation and FIG. 11 (b) is a diagram showing the state of the coating head unit tilted counterclockwise with the long direction of the nozzle forming surface of the coating head as the center of rotation.

### [Modes for carrying out the invention]

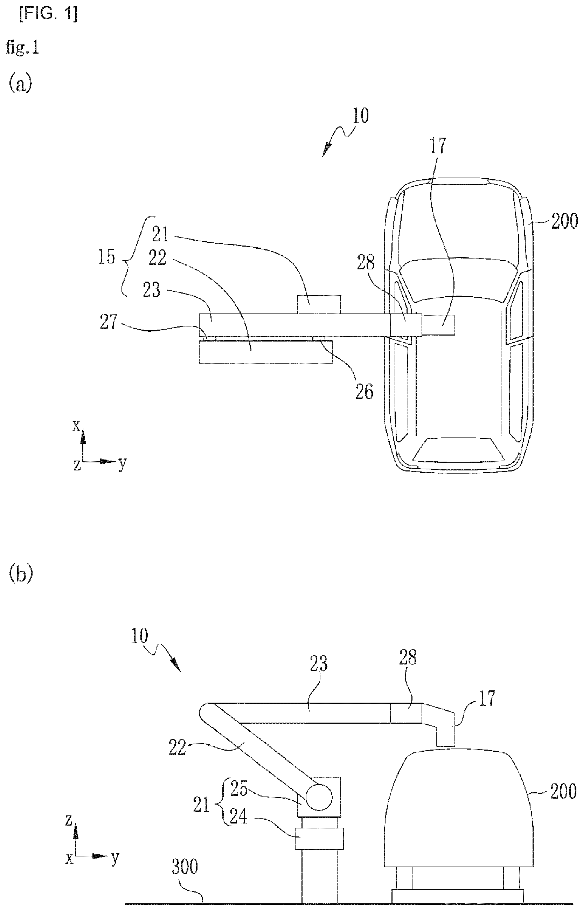

The coating machine of the present embodiment is arranged to the side of a coating line in an automobile manufacturing plant and is used for coating vehicle bodies 200 conveyed along the coating line. It should be noted that in FIG. 1 (a), the vehicle body 200 is transported from the lower side to the upper side of FIG. 1 (a). Thus, the lower side of FIG. 1 (a) is the upstream side of the conveyor line and the upper side of FIG. 1 (a) is the downstream side of the conveyor line.

It should be noted that, while the vehicle body 200 of an automobile is described as an example of the object to be coated by the coating machine (hereinafter referred to as the object to be coated), the object to be coated may also be an automobile part other than a vehicle body (examples include, but are not limited to, doors, hoods, various panels, etc.), or various parts other than automobile parts (for example, airplane or railway exterior parts), and thus is not limited to a vehicle body of an automobile and may be any object that requires coating.

Furthermore, coating here is performed for the purpose of forming a coating film on the surface of the object to be coated to provide protection of that surface and improved appearance. Therefore, coating includes not only the coating of an object to be coated using coating material of a specific color or coating material having a specific function, but also the coating of an object to be coated using coating materials of multiple colors in sequence. Furthermore, coating includes coating with patterns, illustrations, images, etc.

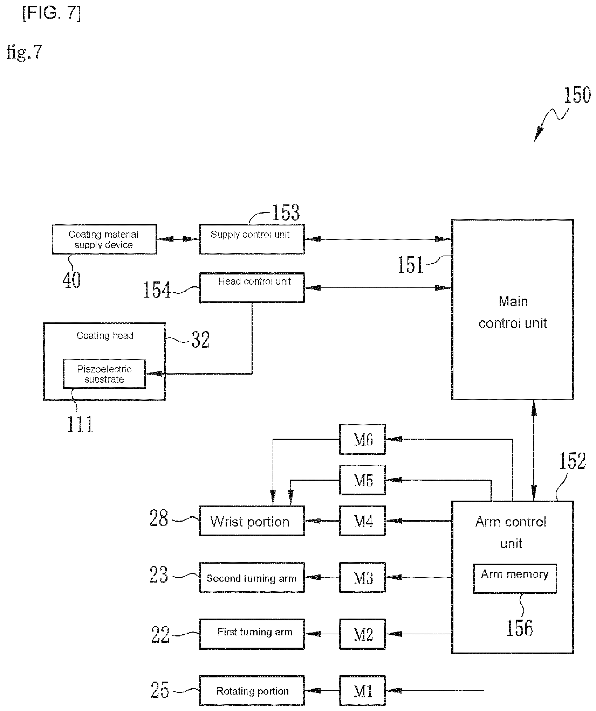

As shown in FIG. 1 (a) and 1 (b), the coating machine 10 has, by way of example, a robot arm 15 and a coating head unit 17. The robot arm 15 is composed of a multi-axis arm having a base 21 and multiple (two in FIG. 1) arm members 22, 23. The base 21 has a fixed portion 24 and a rotating portion 25 rotatable relative to the fixed portion 24. The fixed portion 24 includes a motor M1 (see FIG. 7) inside the fixed portion 24. The rotating portion 25 rotates with the direction perpendicular to the floor surface 300 of the coating line (hereinafter referred to as the vertical direction) as the center of rotation due to the driving of the motor M1. It should be noted that the following description pertains to a case where the floor surface 300 of the coating line is a horizontal surface.

Hereinafter, among the multiple arm members 22, 23, the arm member 22 coupled to the rotating portion 25 will be referred to as the first turning arm 22, and the arm member 23 coupled to the first turning arm 22 will be referred to as the second turning arm 23.

The first turning arm 22 is coupled to a movable shaft portion 26 provided in the rotating portion 25 at one end in the direction of extension of the first turning arm 22. The movable shaft portion 26 provided in the rotating portion 25 is provided with a motor M2 (see FIG. 7) for rotating the coupled first turning arm 22 in a plane orthogonal to the floor surface 300 of the coating line (e.g., the yz plane when the robot arm 15 is in the state of FIG. 1 (b)).

In the direction of extension of the first turning arm 22, the second turning arm 23 is coupled via a movable shaft portion 27 to the other end, which is opposite to the one end coupled to the movable shaft portion 26 of the rotating portion 25. The movable shaft portion 27 is provided with a motor M3 (see FIG. 7) as described below for rotating the coupled second turning arm 23 in a plane orthogonal to the floor surface 300 of the coating line (e.g., the yz plane when the robot arm 15 is in the state of FIG. 1 (b)). Moreover, although not illustrated, the central axis of the movable shaft portion 26 of the rotating portion 25 and the central axis of the movable shaft portion 27 provided in the first turning arm 22 are parallel.

The other end of the second turning arm 23 in the direction of extension is provided with a wrist portion 28. The wrist portion 28 holds the coating head unit 17. The wrist portion 28 has multiple (here, three) motors M4, M5, M6 (see FIG. 7), each with a different axis direction of the drive shaft, and driving these motors causes the held coating head unit 17 to turn about one of the multiple shaft portions that the wrist portion 28 has as a center of turning. It should be noted that the number of shaft portions should be two or more.

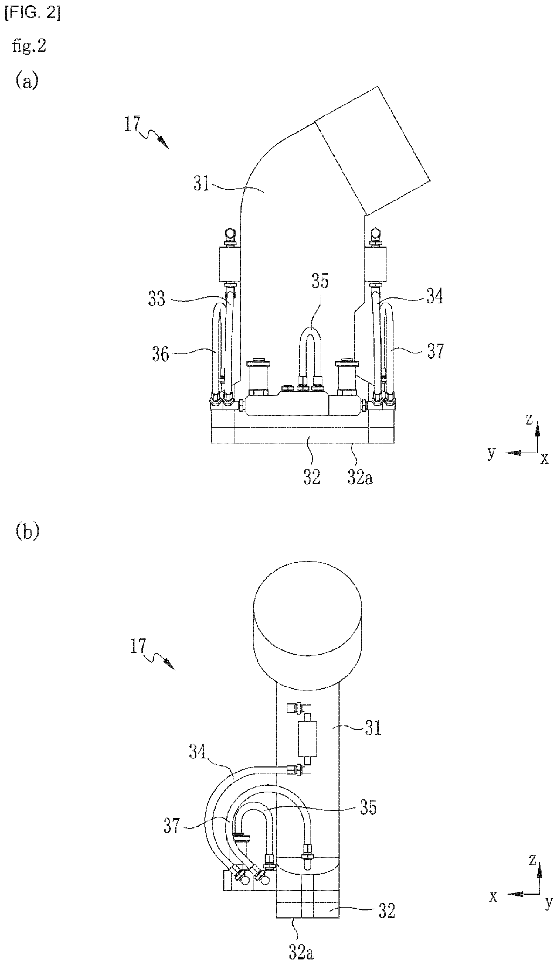

As shown in FIG. 2 (a) and FIG. 2 (b), the coating head unit 17 includes a frame 31 attached to the wrist portion 28 of the robot arm 15 and a coating head 32 attached to a lower end portion of the frame 31. The frame 31 is provided, for example, with three-way valves 79, 83, proportional valves 65, 81, pressure gauges 78, 85, a liquid feed tube 33, a liquid evacuation tube 34, a bypass tube 35, a liquid feed tube 36 connecting the three-way valve 79 and the coating head 32, a liquid evacuation tube 37 connecting the three-way valve 83 and the coating head 32, etc.

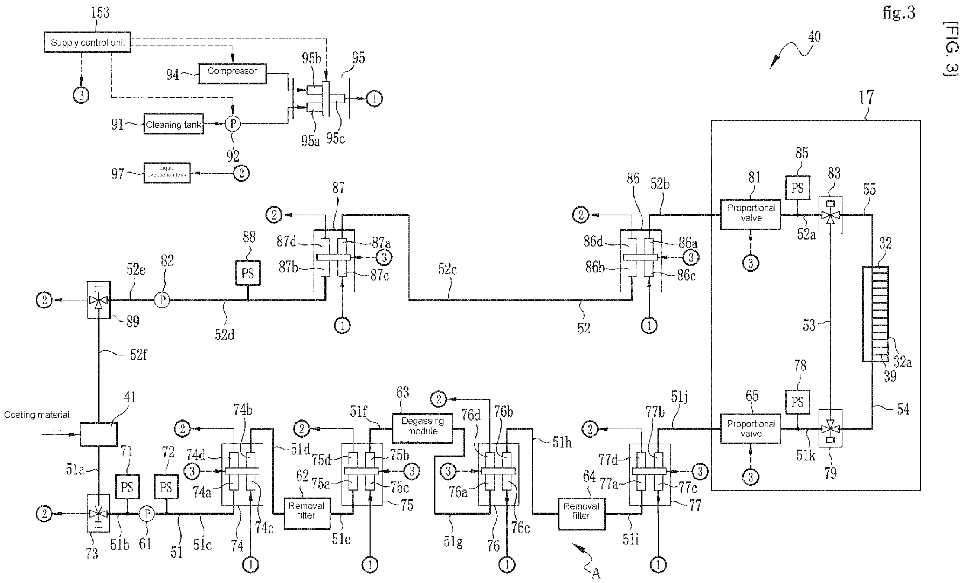

Inside the liquid feed tube 33, there is provided a flow passage 51k (see FIG. 3) forming a portion of the supply passage 51 described below. Furthermore, inside the liquid evacuation tube 34, there is provided a flow passage 52a (see FIG. 3) forming a portion of the return flow passage 52 described below. Inside the bypass tube 35, there is provided a bypass flow passage 53 (see FIG. 3) as described below. Inside the liquid feed tube 36, there is provided a flow passage 54 (see FIG. 3) as described below. Inside the liquid evacuation tube 37, there is provided a flow passage 55 (see FIG. 3) as described below.

Of these tubes, the liquid feed tubes 33, 36 are arranged on one end side of the rectangular coating head 32 in the long direction (in the y-direction in FIG. 2) of the nozzle forming surface 32a. Furthermore, liquid evacuation tubes 34, 37 are arranged in the frame 31 at the other end side of the nozzle forming surface 32a in the long direction (y-direction in FIG. 2).

FIG. 3 is a diagram illustrating an example of a coating material supply device 40 used in the coating machine 10. In FIG. 3, flow passages are shown in solid lines, and electrical and pneumatic signal flow is shown in dotted lines.

The coating material supply device 40 is provided inside the second turning arm 23 of the coating machine 10. As shown in FIG. 3, the coating material supply device 40 circulates coating material between the coating material tank 41 and the coating head 32 by supplying coating material stored in the coating material tank 41 to the coating head 32 during coating of the vehicle body 200 and returning coating material not used up in the coating head 32 from the coating head 32 to the coating material tank 41. Furthermore, when coating of the vehicle body 200 is not being performed, the coating material supply device 40 circulates coating material between the coating material tank 41 and the coating head 32 by causing the coating material stored in the coating material tank 41 to flow through the supply passage 51, bypass flow passage 53, and return flow passage 52, described below, in that order. It should be noted that the coating material tank 41 corresponds to the reservoir unit recited in the claims.

Coating materials used for coating the vehicle body 200 are, for example, water-based coating materials and solvent-based coating materials using pigments. Thus, by circulating coating material in the coating material supply device 40, separation of the pigments contained in the coating material and agglomerating of the pigments is prevented. It will be noted that the coating material may be a dye-based coating material using a dye instead of a pigment-based coating material using a pigment.

As shown in FIG. 3, the coating material supply device 40 has, for example, a supply passage 51 that supplies coating material stored in the coating material tank 41 to the coating head 32, a return flow passage 52 that returns coating material that was not used up in the coating head 32 to the coating material tank 41 from the coating head 32, and a bypass flow passage 53 that allows coating material to flow from the supply passage 51 to the return flow passage 52 without supplying coating material to the coating head 32. Here, the supply passage 51 is connected via a flow passage 54 to a supply side large flow passage 101 of the coating head 32. Furthermore, the return flow passage 52 is connected via a flow passage 55 to an evacuation side large flow passage 105 of the coating head 32. The supply passage 51 may be directly connected to the supply side large flow passage 101 of the coating head 32. Similarly, the return flow passage 52 may be directly connected to the evacuation side large flow passage 105 of the coating head 32.

In the following, when describing the configuration of the supply passage 51 of coating material supply device 40, with regard to the coating material supply direction, the coating material tank 41 side may be referred to as the upstream side and the coating head 32 side may be referred to as the downstream side. In addition, in describing the configuration of the return flow passage 52 of the coating material supply device 40, the coating head 32 side may be referred to as the upstream side and the coating material tank 41 side may be referred to as the downstream side.

The coating material tank 41 stores the coating material used for coating the vehicle body 200 using the coating head 32. The coating material tank 41 is arranged outside the coating machine 10 (for example, on the floor surface 300 of the coating line). The coating material tank 41 is supplied with coating material from outside as necessary in the process of coating the vehicle body 200 using the coating head 32. As described above, coating material which has flowed through the return flow passage 52 flows into the coating material tank 41. When the coating material that has flowed through the return flow passage 52 flows into the coating material tank 41, air bubbles flow in together with the coating material and float to the liquid surface in the coating material tank 41. Thus, the coating material tank 41 may have the function to remove air bubbles which have floated to the liquid surface.

The coating head 32 has a nozzle forming surface 32a with multiple nozzles 39 arranged in a two-dimensional array, and the coating material supplied via the supply passage 51 is ejected from each of the multiple nozzles 39 to form a coating film on the surface of the vehicle body 200. That is, the nozzle forming surface 32a functions as an ejection surface for ejecting droplets of coating material towards the vehicle body 200. Details of the structure of the coating head 32 are described below.

Although the coating head 32 is an inkjet type coating head that ejects coating material droplets, for example, by driving a piezoelectric substrate (or piezoelectric device), the coating head 32 may also be another on-demand type of coating head, such as a thermal type. The coating head 32 may also be a continuous type coating head rather than a drop-on-demand type.

The supply passage 51 is a flow passage that supplies coating materials stored in the coating material tank 41 to the coating head 32. In the supply passage 51, starting from the upstream side, there are arranged a gear pump 61, a removal filter 62, a degassing module 63, a removal filter 64 and a proportional valve 65, which function as circuit components, in that sequence. It should be noted that the gear pump 61 corresponds to the cleaning liquid supply unit recited in the claims.

The gear pump 61 is an element which draws in coating material stored in the coating material tank 41, the feeds the drawn-in coating material toward the coating head 32. The gear pump 61 is driven and controlled by a supply control unit 153 described below. When gear pump 61 is driven, the pressure on the upstream side of the gear pump 61, that is, inside the flow passages 51a and 51b between the coating material tank 41 and the gear pump 61, becomes negative, and the coating material stored in the coating material tank 41 is drawn into the flow passages 51a and 51b. The drawn-in coating material is then fed to downstream side of the gear pump 61.

The flow passage 51b on the input side of the gear pump 61 and the flow passage 51c on the output side are each provided with a pressure gauge (PS) 71, 72. The pressure gauge 71 detects the pressure of the coating material flowing through the flow passage 51b. The pressure gauge 72 detects the pressure of the coating material flowing through the flow passage 51c. Therefore, the gear pump 61 is driven and controlled based on the pressures detected by the pressure gauges 71 and 72 so that the pressure value of the coating material to be fed out remains constant.

A three-way valve 73 is provided between coating material tank 41 and gear pump 61, that is, between flow passages 51a and 51b. The three-way valve 73 is switched over and controlled by the supply control unit 153 described below. The three-way valve 73 can be switched to either a state in which the flow passage 51a is in communication with the flow passage 51b or a state in which the flow passage 51b is in communication with a liquid evacuation passage (not illustrated) connected to a liquid evacuation tank 97. For example, during supply of coating material, the three-way valve 73 is kept in a state in which the flow passage 51a is in communication with flow passage 51b. Furthermore, when cleaning the interior of the supply passage 51, the three-way valve 73 is switched to a state in which the flow passage 51b is in communication with the liquid evacuation passage (not illustrated) connected to the liquid evacuation tank 97.

A switching valve 74 is provided in the downstream side end portion of the flow passage 51c. The switching valve 74 has four valve portions 74a, 74b, 74c and 74d. Of these valve portions 74a, 74b, 74c, 74d, for example, valve portion 74a is connected to the downstream side end portion of flow passage 51c, and valve portion 74b is connected to the upstream side end portion of flow passage 51d going towards the removal filter 62. In addition, valve portion 74c is connected to a flow passage (not illustrated) leading from a manifold 95. Further, valve portion 74d is connected to a flow passage (not illustrated) connected to the liquid evacuation tank 97. These valve portions 74a, 74b, 74c, 74d are controlled to open and close by the supply control unit 153, described later.

For example, during supply of coating material, of the valve portions 74a, 74b, 74c, 74d of the switching valve 74, the valve portions 74a and 74b are kept open, while the valve portions 74c and 74d are kept closed.

In addition, during cleaning of the coating material supply device 40, the valve portions 74a, 74b, 74c, 74d of the switching valve 74 are controlled to open and close in accordance with the direction in which cleaning liquid and air are to be made to flow. For example, if cleaning liquid or air for cleaning (which may be referred to hereinafter simply as air) is to be made to flow from the switching valve 74 toward the three-way valve 73, valve portion 74a and valve portion 74c are kept open, while valve portions 74b, 74d are kept closed.

In addition, for example, if cleaning liquid or air is to be made to flow from the switching valve 74 toward switching valve 75, described below, valve portions 74b, 74c are kept open, while valve portions 74a, 74d are kept closed. Furthermore, if cleaning liquid or air is to be made to flow from switching valve 75 toward switching valve 74, valve portions 74b, 74d are kept open, while valve portions 74a, 74c are kept closed.

A removal filter 62 is provided on the downstream side of flow passage 51d connected to valve portion 74b of the switching valve 74. The removal filter 62 removes foreign matter such as coarse particles and pigment agglomerates contained in the coating material, as well as bubbles that exceed a predetermined size among the bubbles contained in the coating material. The removal filter 62 is for example a mesh-like body such as a metal net or resin net, or a porous body, or a metal plate in which fine through-holes have been formed. Examples of a mesh-like body include metal mesh filters, metal fibers, e.g. fine strands of metal known as SUS made into the form of felt, metal sintered filters which have been compressed and sintered, electroformed metal filters, electron beam processed metal filters, laser beam processed metal filters, and the like.

A switching valve 75 is provided on the downstream side of the flow passage 51e connected to the output side of the removal filter 62. Similarly to the switching valve 74, the switching valve 75 has four valve portions 75a, 75b, 75c, 75d. For example, the valve portion 75a is connected to the downstream side end portion of the flow passage 51e, and the valve portion 75b is connected to the upstream side end portion of the flow passage 51f going toward the degassing module 63. In addition, the valve portion 75c is connected to a flow passage (not illustrated) leading from the manifold 95. Further, valve portion 75d is connected to a flow passage (not illustrated) connected to the liquid evacuation tank 97. These valve portions 75a, 75b, 75c, 75d are controlled to open and close by the supply control unit 153, described later.

For example, during supply of coating material, of the valve portions 75a, 75b, 75c, 75d of the switching valve 75, the valve portions 75a and 75b are kept open, while the valve portions 75c and 75d are kept closed.

Furthermore, during cleaning of the coating material supply device 40, the valve portions 75a, 75b, 75c, 75d of the switching valve 75 are controlled to open and close in accordance with the direction in which cleaning liquid and air are to be supplied. For example, if the cleaning liquid or air is to be made to flow from switching valve 74 toward switching valve 75, valve portions 75a and 75d are kept open, while valve portions 75b and 75c are kept closed. Furthermore, if cleaning liquid or air is to be made to flow from switching valve 75 toward switching valve 74, valve portion 75a and valve portion 75c are kept open, while valve portions 75b, 75d are kept closed.

Furthermore, for example, if cleaning liquid or air is to be made to flow from switching valve 75 toward switching valve 76, described later, valve portions 75b, 75c are kept open, while valve portions 75a, 75d are kept closed. Furthermore, if cleaning liquid or air is to be made to flow from switching valve 76 toward switching valve 75, valve portions 75b, 75d are kept open, while valve portions 75a, 75c are kept closed.

A degassing module 63 is provided on the downstream side of the flow passage 51f connected to valve portion 75b of switching valve 75. The degassing module 63 removes (degasses) dissolved gas and bubbles present in the coating material. Examples of the degassing module 63 include a hollow fiber membrane bundle made by bundling multiple hollow fiber membranes.

A switching valve 76 is provided on the downstream side of the flow passage 51g connected to the output side of the degassing module 63. Similarly to the switching valves 74 and 75, the switching valve 76 has four valve portions 76a, 76b, 76c, 76d. For example, the valve portion 76a is connected to the downstream side end portion of the flow passage 51g, and the valve portion 76b is connected to the upstream side end portion of the flow passage 51h going toward the removal filter 64. In addition, the valve portion 76c is connected to a flow passage (not illustrated) leading from the manifold 95. Further, valve portion 76d is connected to a flow passage (not illustrated) connected to the liquid evacuation tank 97. These valve portions 76a, 76b, 76c, 76d are controlled to open and close by the supply control unit 153, described later.

For example, during supply of coating material, of the valve portions 76a, 76b, 76c, and 76d of the switching valve 76, the valve portions 76a and 76b are kept open, while the valve portions 76c and 76d are kept closed.

Furthermore, during cleaning of the coating material supply device 40, the valve portions 76a, 76b, 76c, 76d of the switching valve 76 are controlled to open and close in accordance with the direction in which cleaning liquid and air are to be supplied. For example, if cleaning liquid or air is to be made to flow from switching valve 75 toward switching valve 76, valve portions 76a, 76d are kept open, while valve portions 76b, 76c are kept closed. Furthermore, if cleaning liquid or air is to be made to flow from switching valve 76 toward switching valve 75, valve portions 76a, 76c are kept open, while valve portions 76b, 76d are kept closed.

Furthermore, for example, if cleaning liquid or air is to be made to flow from switching valve 76 toward switching valve 77, described later, valve portions 76b, 76c are kept open, while valve portions 76a, 76d are kept closed. Furthermore, if cleaning liquid or air is to be made to flow from switching valve 77 toward switching valve 76, valve portions 76b, 76d are kept open, while valve portions 76a, 76c are kept closed.

A removal filter 64 is provided on the downstream side of the flow passage 51h connected to the valve portion 76b of the switching valve 76. The removal filter 64 has the same structure as the removal filter 62. Thus, the description of the removal filter 64 will be omitted below.

A switching valve 77 is provided on the downstream side of the flow passage 51i connected to the output side of the removal filter 64. Similarly to the switching valves 74, 75, 76, the switching valve 77 has four valve portions 77a, 77b, 77c, 77d. For example, the valve portion 77a is connected to the downstream side end portion of the flow passage 51i and the valve portion 77b is connected to the upstream side end portion of the flow passage 51j going toward the proportional valve 65. In addition, the valve portion 77c is connected to a flow passage (not illustrated) leading from the manifold 95. Further, valve portion 77d is connected to a flow passage (not illustrated) connected to the liquid evacuation tank 97. These valve portions 77a, 77b, 77c, 77d are controlled to open and close by the supply control unit 153, described later.

For example, during supply of coating material, of the valve portions 77a, 77b, 77c, and 77d of the switching valve 77, the valve portions 77a and 77b are kept open, while the valve portions 77c and 77d are kept closed.

Furthermore, during cleaning of the coating material supply device 40, the valve portions 77a, 77b, 77c, 77d of the switching valve 77 are controlled to open and close in accordance with the direction in which cleaning liquid and air are to be made to flow. For example, if the cleaning liquid or air is to be made to flow from switching valve 76 toward switching valve 77, valve portions 77a and 77d are kept open, while valve portions 77b and 77c are kept closed. Furthermore, if cleaning liquid or air is to be made to flow from switching valve 77 toward switching valve 76, valve portions 77a, 77c are kept open, while valve portions 77b, 77d are kept closed.

Furthermore, for example, if cleaning liquid or air is to be made to flow from switching valve 77 toward switching valve 86, valve portions 77b, 77c are kept open, while valve portions 77a, 77d are kept closed. Furthermore, if cleaning liquid or air is to be made to flow from switching valve 86 toward switching valve 77, valve portions 77b, 77d are kept open, while valve portions 77a, 77c are kept closed.

A proportional valve 65 is provided on the downstream side of the flow passage 51j connected to the valve portion 77b of the switching valve 77. The proportional valve 65 is controlled to open and close by the supply control unit 153, described later, so that the pressure value detected by the pressure gauge 78 provided in the flow passage 51k connected to the output side of the proportional valve 65, that is, the pressure value of the coating material flowing on the downstream side of the proportional valve 65, remains constant.

A three-way valve 79 is attached to the downstream side end portion of the flow passage 51k. To the three-way valve 79, in addition to the flow passage 51k, there is connected a flow passage 54 connected to the coating head 32, and the upstream side end portion of the bypass flow passage 53. The three-way valve 79 is switched and controlled by the supply control unit 153. For example, the three-way valve 79 maintains flow passage 51k and flow passage 54 that is connected to the coating head 32 in communication when the vehicle body 200 is being coated. Furthermore, the three-way valve 79 maintains the flow passage 51k and the bypass flow passage 53 in communication when the vehicle body 200 is not being coated.

The return flow passage 52 is a flow passage for returning coating material that was not used up by the coating head 32 and the coating material flowing through the bypass flow passage 53 toward the coating material tank 41. A proportional valve 81 and a gear pump 82, which function as circuit components, are arranged in that order starting from the upstream side in the return flow passage 52.

A three-way valve 83 is attached to the upstream side end portion of the flow passage 52a of the return flow passage 52. To the three-way valve 83, in addition to the flow passage 52a, there is connected a flow passage 55 connected to the coating head 32, and the downstream side end portion of the bypass flow passage 53. The three-way valve 83 is switched and controlled by the supply control unit 153, described later. For example, the three-way valve 83 maintains flow passage 52a and flow passage 55 that is connected to the coating head 32 in communication when the vehicle body 200 is being coated. Furthermore, the three-way valve 83 maintains the flow passage 52a and the bypass flow passage 53 in communication when the vehicle body 200 is not being coated.

A pressure gauge 85 is connected to the flow passage 52a. The pressure gauge 85 measures the pressure of the coating material flowing on the upstream side of the proportional valve 81, i.e., flowing from the coating head 32 toward the proportional valve 81.

A proportional valve 81 is arranged on the downstream side of the pressure gauge 85 in the flow passage 52a. The proportional valve 81 is controlled to open and close by the supply control unit 153, and maintains a constant pressure value of the coating material flowing through the flow passage 52a.

A switching valve 86 is provided on the downstream side of the flow passage 52b connected to the output side of the proportional valve 81. Similarly to the switching valves 74, 75, 76, 77 provided in the supply passage 51, the switching valve 86 has four valve portions 86a, 86b, 86c, 86d. For example, the valve portion 86a is connected to the downstream side end portion of the flow passage 52b, and the valve portion 86b is connected to the upstream side end portion of the flow passage 52c. Furthermore, the valve portion 86c is connected to a flow passage (not illustrated) leading from the manifold 95. Further, valve portion 86d is connected to a flow passage (not illustrated) connected to the liquid evacuation tank 97. These valve portions 86a, 86b, 86c, 86d are controlled to open and close by the supply control unit 153, described later.

For example, during supply of coating material, of the valve portions 86a, 86b, 86c, 86d of the switching valve 86, the valve portions 86a and 86b are kept open, while the valve portions 86c and 86d are kept closed.

Furthermore, during cleaning of the coating material supply device 40, the four valve portions 86a, 86b, 86c, 86d of the switching valve 86 are controlled to open and close in accordance with the direction in which cleaning liquid and air are to be supplied. Furthermore, if cleaning liquid or air is to be made to flow from switching valve 77 toward switching valve 86, valve portion 86a and valve portion 86d are kept open, while valve portions 86b, 86c are kept closed. Furthermore, if cleaning liquid or air is to be made to flow from switching valve 86 toward switching valve 77, valve portions 86a, 86c are kept open, while valve portions 86b, 86d are kept closed.

Furthermore, for example, if cleaning liquid or air is to be made to flow from switching valve 86 toward switching valve 87, valve portions 86b, 86c are kept open, while valve portions 86a, 86d are kept closed. Furthermore, if cleaning liquid or air is to be made to flow from switching valve 87 toward switching valve 86, valve portions 86b, 86d are kept open, while valve portions 86a, 86c are kept closed.

A switching valve 87 is provided at the downstream side end portion of the flow passage 52c. Similarly to the switching valves 74, 75, 76, 77 provided in the supply passage 51, the switching valve 87 has four valve portions 87a, 87b, 87c, 87d. For example, the valve portion 87a is connected to the downstream side end portion of the flow passage 52c, and the valve portion 87b is connected to the upstream side end portion of the flow passage 52d. Furthermore, the valve portion 87c is connected to a flow passage (not illustrated) leading from the manifold 95. Further, valve portion 87d is connected to a flow passage (not illustrated) connected to the liquid evacuation tank 97. These valve portions 87a, 87b, 87c, 87d are controlled to open and close by the supply control unit 153, described later.

For example, during supply of coating material, of the valve portions 87a, 87b, 87c, 87d of the switching valve 87, the valve portions 87a and 87b are kept open, while the valve portions 87c and 87d are kept closed.

Furthermore, during cleaning of the coating material supply device 40, the valve portions 87a, 87b, 87c, 87d of the switching valve 87 are controlled to open and close in accordance with the direction in which cleaning liquid and air are to be supplied. Furthermore, if cleaning liquid or air is to be made to flow from switching valve 86 toward switching valve 87, valve portion 87a and valve portion 87d are kept open, while valve portions 87b, 87c are kept closed. Furthermore, if cleaning liquid or air is to be made to flow from switching valve 87 toward switching valve 86, valve portions 87a, 87c are kept open, while valve portions 87b, 87d are kept closed.

Furthermore, for example, if cleaning liquid or air is to be made to flow from switching valve 87 toward three-way valve 89, valve portions 87b, 87c are kept open, while valve portions 87a, 87d are kept closed.

The flow passage 52d is provided with a pressure gauge 88. The pressure gauge 88 detects the pressure of the coating material flowing through the flow passage 52d.

A gear pump 82 is provided at the downstream side end portion of the flow passage 52d. The gear pump 82 is driven and controlled by the supply control unit 153, described later, such that the pressure of the coating material flowing through the flow passage 52d, that is, the pressure value detected by the pressure gauge 88, remains constant. When the gear pump 82 is driven, the pressure on the upstream side of the gear pump 82, that is, the pressure inside the flow passage 52d, becomes negative, and coating material is drawn into the flow passage 52d. The coating material drawn into the flow passage 52d is fed out towards the coating material tank 41.

A three-way valve 89 is connected to the downstream side of the flow passage 52e connected to the output side of the gear pump 82. The three-way valve 89 is switched and controlled by the supply control unit 153, described later. The three-way valve 89 can be switched to either a state in which the flow passage 52e is in communication with the flow passage 52f connected to the coating material tank 41 or a state in which the flow passage 52e is in communication with a liquid evacuation passage (not illustrated) connected to the liquid evacuation tank 97. For example, during supply of coating material, the three-way valve 89 is kept in a state in which the flow passage 52e is in communication with flow passage 52f. In addition, when cleaning the interior of the return flow passage 52, the three-way valve 89 is switched to a state in which the flow passage 52e is in communication with a liquid evacuation passage (not illustrated) connected to the liquid evacuation tank 97.

In the coating material supply device 40 described above, during cleaning of the coating material supply device 40, the cleaning liquid from the cleaning tank 91 or the air for cleaning from a compressor 94 (hereinafter sometimes referred to as air) is supplied from any one of the switching valves 74, 75, 76, 77 to the supply passage 51 or from any of the switching valves 86, 87 to the return flow passage 52.

The cleaning tank 91 stores a cleaning liquid, such as, for example, a cleaning thinner. The pump 92 is driven and controlled by the supply control unit 153 described below. The pump 92 draws in the cleaning liquid accumulated in the cleaning tank 91 and feeds the drawn-in cleaning liquid out to the manifold 95.

The compressor 94 is driven and controlled by the supply control unit 153 described below. The compressor 94 feeds air for cleaning towards the manifold 95 described below.

The manifold 95 comprises a plurality of valve portions including, for example, valve portion 95a to which a flow passage (not illustrated) extending from the cleaning tank 91 is connected, valve portion 95b to which a flow passage (not illustrated) extending from the compressor 94 is connected, and valve portion 95c to which flow passages extending to each of the switching valves 74, 75, 76, 77, 86, 87 described above is connected. These plurality of valve portions are individually controlled to open and close by the supply control unit 153 described below. The cleaning liquid from the cleaning tank 91 and the air from the compressor 94 are alternately fed into the supply passage 51 and return flow passage 52 of the coating material supply device 40 under opening and closing control of the valve portions of the manifold 95.

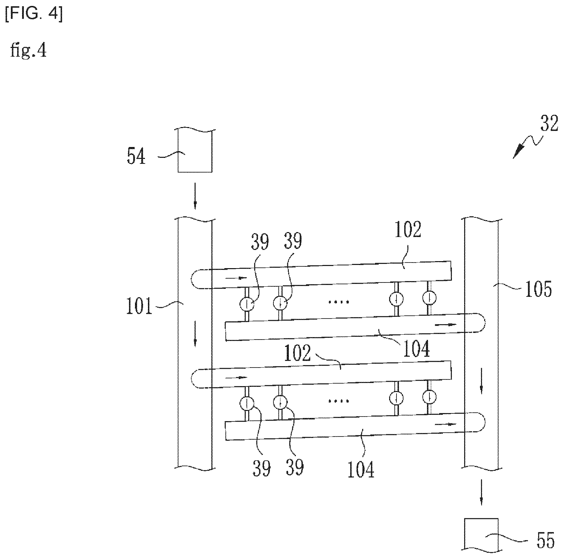

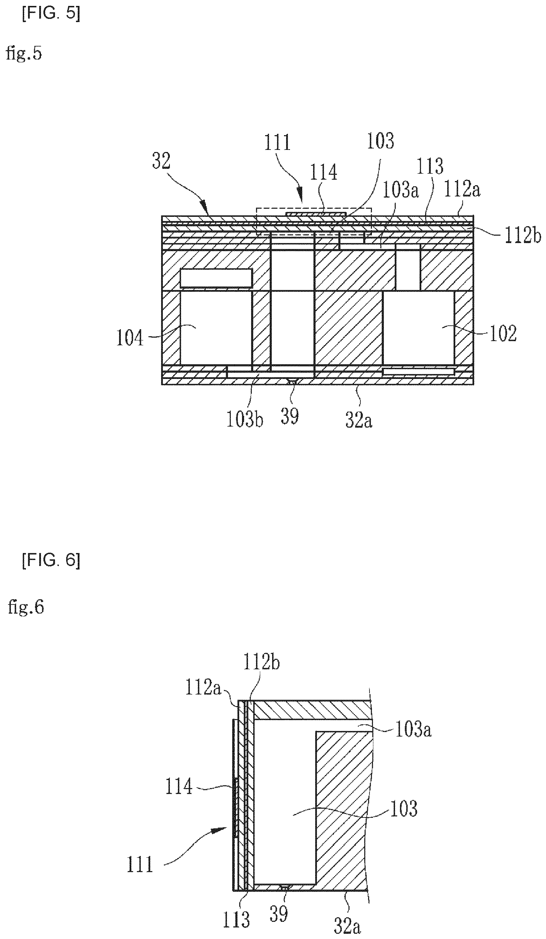

Next, an example of the structure of the interior of the coating head 32 will be described. FIG. 4 is a diagram schematically illustrating a structure for providing coating material to each of the plurality of nozzles 39 provided on the nozzle forming surface 32a in the coating head 32. Furthermore, FIG. 5 is a cross-sectional view illustrating the configuration of the vicinity of the row direction supply flow passage 102, nozzle pressurization chamber 103 and row direction evacuation flow passage 104 provided within the coating head 32.

As shown in FIG. 4 and FIG. 5, the coating head 32 includes a supply side large flow passage 101, a row direction supply flow passage 102, a nozzle pressurization chamber 103, a row direction evacuation flow passage 104, and an evacuation side large flow passage 105. The supply side large flow passage 101 is connected to flow passage 54. Furthermore, the row direction supply flow passage 102 is connected to the supply side large flow passage 101. Thus, coating material flowing through the flow passage 54 flows to the supply side large flow passage 101 and then is diverted to the row direction supply flow passage 102.

The nozzle pressurization chamber 103 is connected to the row direction supply flow passage 102 via the nozzle supply flow passage 103a. As a result, coating material is supplied from the row direction supply flow passage 102 into the nozzle pressurization chamber 103. The nozzle pressurization chamber 103 is provided in accordance with the number of nozzles 39 and is able to cause the coating material inside it to be ejected from the nozzles 39 using a piezoelectric substrate 111, described later.

Furthermore, the nozzle pressurization chamber 103 is connected to the row direction evacuation flow passage 104 via a nozzle evacuation flow passage 103b. Thus, the coating material that was not ejected from the nozzles 39 is discharged from the nozzle pressurization chamber 103 into the row direction evacuation flow passage 104 via the nozzle evacuation flow passage 103b. Furthermore, the row direction evacuation flow passage 104 is connected to evacuation side large flow passage 105. The evacuation side large flow passage 105 is a flow passage into which coating material that has been evacuated from the respective row direction evacuation flow passages 104 flows together. This evacuation side large flow passage 105 is connected to the return flow passage 52.

According to this configuration, coating material which has been supplied from the supply passage 51 passes through the supply side large flow passage 101, a row direction supply flow passage 102, a nozzle supply flow passage 103a and a nozzle pressurization chamber 103, and is ejected from a nozzle 39. Furthermore, coating material that was not ejected from the nozzle 39 passes from the nozzle pressurization chamber 103 through nozzle evacuation flow passage 103b, row direction evacuation flow passage 104 and evacuation side large flow passage 105 and is returned to the return flow passage 52.

It should be noted that, in the configuration shown in FIG. 5, one row direction evacuation flow passage 102 is arranged in correspondence to one row direction supply flow passage 104. However, multiple (for example, two) row direction evacuation flow passages 104 may also be arranged in correspondence to one row direction supply flow passage 102. Furthermore, one row direction evacuation flow passage 104 may also be arranged in correspondence to multiple row direction supply flow passages 102.

Furthermore, as shown in FIG. 5, a piezoelectric substrate 111 is arranged on the ceiling of the nozzle pressurization chamber 103 (the surface on the opposite side from the nozzle 39). The piezoelectric substrate 111 comprises two piezoelectric ceramic layers 112a, 112b, which constitute piezoelectric elements, and further comprises a common electrode 113 and an individual electrode 114. The piezoelectric ceramic layers 112a, 112b are members capable of extending and contracting upon application of voltage from the outside. Ceramic materials having ferroelectric properties, such as lead zirconate titanate (PZT) type, NaNbO₃ type, BaTiO₃ type, (BiNa)NBO₃ type or BiNaNb₅O₁₅ type materials, can be used for these piezoelectric ceramic layers 112a, 112b.

Furthermore, as shown in FIG. 5, the common electrode 113 is arranged between piezoelectric ceramic layer 112a and piezoelectric ceramic layer 112b. In addition, a surface electrode (not illustrated) for the common electrode is formed on the top surface of the piezoelectric substrate 111. The common electrode 113 and the surface electrode for the common electrode are electrically connected via an unillustrated through-conductor present in the piezoelectric ceramic layer 112a. Furthermore, the individual electrodes 114 are arranged at locations opposite the above-described nozzle pressurization chambers 103. Furthermore, the portion of the piezoelectric ceramic layer 112a that is sandwiched between the common electrode 113 and the individual electrode 114 is polarized in the thickness direction. Therefore, when voltage is applied to the individual electrode 114, the piezoelectric ceramic layer 112a warps due to piezoelectric effect. Thus, when a predetermined drive signal is applied to the individual electrode 114, the piezoelectric ceramic layer 112b undergoes relative displacement so as to reduce the volume of the nozzle pressurization chamber 103, thereby causing the coating material to be ejected.

It will be noted that, while in the configuration shown in FIG. 5, the common electrode 113 is disposed on the ceiling of the nozzle pressurization chamber 103, the invention is not limited to such a configuration. For example, it is possible to employ a configuration as shown in FIG. 6, wherein the common electrode 113 is arranged on a side surface of the nozzle pressurization chamber 103, or any other configuration that allows the coating material to be efficiently ejected from the nozzle 39.

Next, a configuration for controlling the coating machine 10 described above (hereinafter referred to as a control system) will be described. FIG. 7 is a diagram illustrating the configuration of the control system in the coating machine 10. As shown in FIG. 7, the control system 150 has a main control unit 151, an arm control unit 152, a supply control unit 153, and a head control unit 154. Although illustration of this will be omitted, the main control unit 151, the arm control unit 152, the supply control unit 153 and the head control unit 154 are composed of a central processing unit (CPU), a memory part (read only memory (ROM), random access memory (RAM), non-volatile memory, etc.), and other elements. The supply control unit 153 corresponds to the cleaning control unit recited in the claims.

The main control unit 151 sends predetermined control signals to each of the arm control unit 152, supply control unit 153, and head control unit 154 so that the robot arm 15, coating material supply device 40, and coating head 32 cooperate to perform coating of the vehicle body 200, i.e. the object to be coated.

The arm control unit 152 provides drive control for each of the motors M1, M2, M3, M4, M5, and M6 provided in the robot arm 15 based on various data stored in an arm memory 156 possessed by the arm control unit. Here, the various data stored in the arm memory 156 are data necessary for coating the vehicle body 200 with the coating machine 10, and includes, for example, data on the external shape of the vehicle body 200 to be coated, trajectory data indicating the movement trajectory of the coating head unit 17 during coating of the vehicle body 200, attitude data indicating the attitude of the robot arm 15 and the coating head unit 17, and the like.

It should be noted that, when multiple vehicle bodies with different external shapes are to be coated with the coating machine 10, the various data described above are stored in the arm memory 156 in correspondence with each of multiple vehicle bodies with different external shapes.

The supply control unit 153 performs drive control of the gear pumps 61, 82, proportional valves 65, 81, switching valves 74, 75, 76, 77, 86, 87, and three-way valves 73, 89, which the coating material supply device 40 possesses, during coating of a vehicle body 200. In addition, the supply control unit 153 performs drive control of the gear pump 61 based on the pressure values of the coating material detected at the pressure gauge 71 and the pressure gauge 72 to adjust the feed-out rate of coating material. Similarly, the supply control unit 153 performs drive control of the gear pump 82 based on the pressure value of the coating material detected by the pressure gauge 88 to adjust the feed-out rate of coating material. Furthermore, the supply control unit 153 performs opening and closing control of the proportional valve 65 based on the pressure value of the coating material detected at the pressure gauge 78 to adjust the feed-out rate of coating material. Similarly, the supply control unit 153 performs opening and closing control of the proportional valve 81 based on the pressure value of the coating material detected at the pressure gauge 85 to adjust the feed-out rate of coating material.

The supply control unit 153 also performs drive control of the proportional valves 65, 81, switching valves 74, 75, 76, 77, 86, 87, and three-way valves 73, 79, 83, 89, as well as drive control of the pump 92, compressor 94, and manifold 95 of the coating material supply device 40 during cleaning of the supply passage 51 and return flow passage 52 of the coating material supply device 40 and the coating head 32.

The head control unit 154 actuates the piezoelectric substrate 111 based on position information of the coating head 32 detected by an unillustrated position sensor. Here, the head control unit 154 is not only capable of controlling actuation of the piezoelectric substrate 111 but is also capable of controlling the actuation frequency for the piezoelectric substrate 111, controlling the voltage applied to the piezoelectric substrate 111, as well as controlling the amount of droplets of coating material ejected from each of the multiple nozzles 39 provided on the nozzle forming surface 32a of the coating head 32 and controlling the timing of droplet ejection.

In the coating machine 10 described above, when the color of the coating material to be used for coating the next vehicle body 200 is to be switched, cleaning of the coating head 32 and coating material supply device 40 is performed, for example, within the time period from the end of coating of the vehicle body 200 to the start of coating of the next vehicle body 200. For cleaning of the coating head 32 and coating material supply device 40, for example, cleaning liquid and air for cleaning may be provided from upstream of the supply passage 51, for example, from the switching valve 74, and are made to flow through the coating head 32 (or bypass flow passage 53) and the return flow passage 52 in that order, and are then evacuated through the three-way valve 89 to the liquid evacuation tank 97 to clean the coating head 32 and coating material supply device 40 as a whole, or else, for example, the circulation passage of coating material from upstream of the supply passage 51 to the downstream side of the return flow passage 52 may be divided into multiple segments, with each of the multiple divided segments being cleaned individually.

A method of cleaning a segment that includes the coating head 32 (the segment from the switching valve 77 to the switching valve 86 shown in FIG. 3) from among the multiple divided segments will be described below. The cleaning of the segment that includes the coating head 32 may be referred to below as cleaning of the coating head 32.

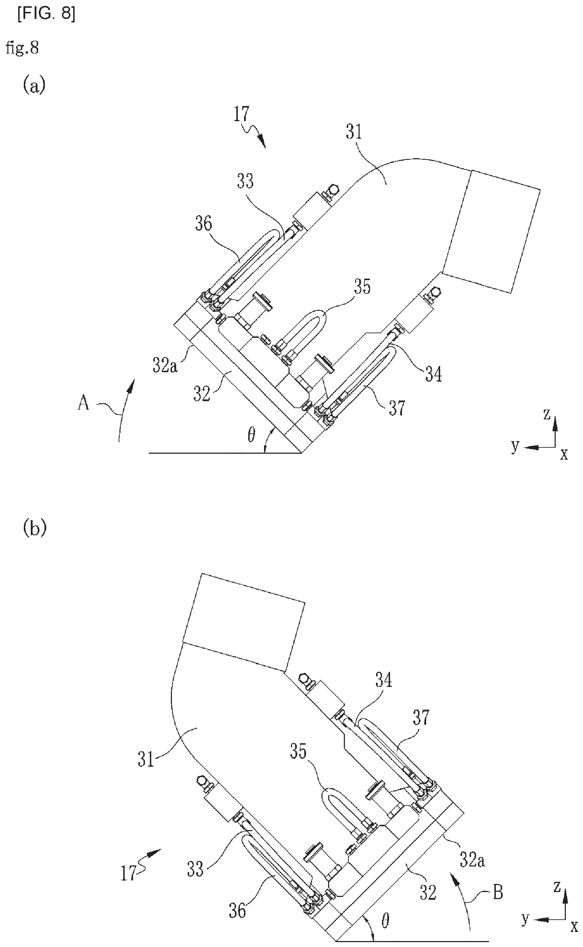

The cleaning of the coating head 32 is performed with the attitude of the coating head 32 being changed, for example, to an attitude in which the nozzle forming surface 32a of the coating head 32 is tilted by a predetermined angle θ in the yz plane in FIG. 8 (a) or FIG. 8 (b) relative to the floor surface 300.

It will be noted that when the coating of the vehicle body 200 by the coating machine 10 has been completed, the nozzle forming surface 32a of the coating head 32 is held, for example, in an attitude facing the floor surface 300 and parallel to the floor surface 300 (see FIG. 2 (a)). Thus, when cleaning the coating head 32, the coating head 32 is changed, for example, from an attitude in which the nozzle forming surface 32a of the coating head 32 faces the floor surface 300 and is parallel to the floor surface 300, to an attitude tilted by a predetermined angle θ relative to the floor surface 300 (see FIG. 8 (a) or FIG. 8 (b)).

Here, the fact that the attitude of the coating head 32 is an attitude facing the floor surface 300 and parallel to the floor surface 300 is taken to be an example of a case where said attitude corresponds to a specified attitude as recited in the claims. However, it suffices that the attitude of the coating head 32 prior to cleaning be different from the attitude of the coating head 32 during cleaning.

In the following, the predetermined angle θ may be referred to as tilt angle θ. Furthermore, the attitude of the coating head 32 in which the nozzle forming surface 32a of the coating head 32 faces the floor surface 300 and is parallel to the floor surface 300 (see FIG. 2) will be referred to as the reference attitude. Furthermore, the attitude of the coating head 32 during cleaning, that is, the attitude of the coating head 32 in which the nozzle forming surface 32a is tilted by an angle θ relative to the floor surface 300, will be referred to as a tilted attitude.

As shown in FIG. 8 (a) and FIG. 8 (b), examples of a tilted attitude of the coating head 32 include, for example, an attitude in which the coating head 32 has been tilted by a predetermined angle θ with the short direction of the nozzle forming surface 32a of the coating head 32 (the x direction in FIG. 8 (a) and FIG. 8 (b)) as the direction of the axis of rotation. Examples of an attitude in which the coating head 32 has been tilted by a predetermined angle θ include an attitude in which the coating head 32 has been tilted clockwise (direction A in FIG. 8 (a)) by a predetermined angle, as shown in FIG. 8 (a), as well as an attitude in which the coating head 32 has been tilted counterclockwise (direction B in FIG. 8 (b)) by a predetermined angle. In the following, direction A in FIG. 8 (a) will be treated as the positive direction, and direction B in FIG. 8 (b) will be treated as the negative direction. Thus, the tilt angle θ takes on a positive value when the attitude of the coating head 32 is the tilted attitude shown in FIG. 8 (a), while the tilt angle θ takes on a negative value when the attitude of the coating head 32 is the tilted attitude shown in FIG. 8 (b). It should be noted that the absolute value |θ| of the aforementioned tilt angle θ is preferably set to be within the range of, for example, 20 to 70°.

The operation for cleaning of the coating head 32 will be described below. The main control unit 151 outputs a movement command to the arm control unit 152 once coating of the vehicle body 200 is completed. In response, the arm control unit 152 actuates the robot arm to move the coating head 32 to a position at which cleaning of the coating head 32 will be performed (hereinafter referred to as cleaning position). When the coating head 32 has moved to the cleaning position, the main control unit 151 outputs a cleaning operation command to the arm control unit 152. In response, the arm control unit 152 actuates the robot arm 15 to change the attitude of the coating head 32 from the reference attitude shown in FIG. 2 (a) to the tilted attitude shown, for example, in FIG. 8 (a). As a result, the coating head 32 is held with the nozzle forming surface 32a of the coating head 32 being tilted by a predetermined angle θ to the floor surface 300.

The main control unit 151 then outputs a cleaning start command to the supply control unit 153. In response, the supply control unit 153 opens the valve portions 77b, 77c of the switching valve 77 and closes the valve portions 77a, 77d. At the same time, the supply control unit 153 closes the valve portions 86a, 86d of the switching valve 86 and opens the valve portions 86b, 86c. The supply control unit 153 also controls the three-way valve 79 to place the flow passage 51k into communication with the bypass flow passage 53. At the same time, the supply control unit 153 controls the three-way valve 83 to place the flow passage 52a into communication with the bypass flow passage 53. The supply control unit 153 then opens the valve portions 95a, 95c of the manifold 95 and closes the valve portion 95b. Finally, the supply control unit 153 drives the pump 92. This causes the cleaning liquid stored in the cleaning tank 91 to flow via the valve portions 95a, 95c of the manifold 95 and valve portions 77c, 77b of the switching valve 77 and through the supply passage 51 (more specifically, the flow passages 51j, 51k), the bypass flow passage 53, and return flow passage 52 (more specifically, the flow passages 52a, 52b) in that order. Cleaning liquid that has flowed through the supply passage 51 (more specifically, the flow passages 51j, 51k), the bypass flow passage 53, and the return flow passage 52 (more specifically, the passages 52a, 52b) in that order is evacuated via valve portions 86a, 86d of switching valve 86 into the liquid evacuation tank 97. As a result, the bypass flow passage 53 is cleaned by the cleaning liquid.

Then, once a set period of time T1 has elapsed after starting the supply of cleaning liquid to the bypass flow passage 53, the supply control unit 153 controls the three-way valve 79 to place the flow passage 51k and the flow passage 54 into communication, and at the same time controls the three-way valve 83 to place the flow passage 52a and the flow passage 55 into communication. This causes the cleaning liquid stored in the cleaning tank 91 to flow via the valve portions 95a, 95c of the manifold 95, and valve portions 77c, 77b of the switching valve 77 and through the supply passage 51 (more specifically, the flow passages 51j, 51k), the flow passage 54, the coating head 32, the flow passage 55, and the return flow passage 52 (more specifically, the flow passages 52a, 52b) in that order. As a result, the interior of the coating head 32 is cleaned by the cleaning liquid. The cleaning liquid flowing through the return flow passage 52 (more specifically, flow passages 52a, 52b) is discharged to the liquid evacuation tank 97 via the valve portion 86d of the switching valve 86.

The cleaning liquid which has flowed into the interior of the coating head 32 flows through the supply side large flow passage 101, the row direction supply flow passage 102, the nozzle pressurization chamber 103, the row direction evacuation flow passage 104, and the evacuation side large flow passage 105, in that order. At this time, the residual coating material remaining in these flow passages is pushed out by the cleaning liquid. Furthermore, as described above, a nozzle 39 is formed in the lower end portion of the nozzle pressurization chamber 103. Accordingly, a portion of the residual coating material remaining in the vicinity of the nozzle 39 in the nozzle pressurization chamber 103 is evacuated to the outside through the nozzle 39 by the cleaning liquid that has flowed into the nozzle pressurization chamber 103. On the other hand, the cleaning liquid pushed out into the evacuation side large flow passage 105 flows from the evacuation side large flow passage 105 to the flow passage 55.

For example, if the attitude of the coating head 32 is held in the tilted attitude shown in FIG. 8 (a), the liquid feed tubes 33, 36 provided in the coating head unit are held at a higher position than the liquid evacuation tubes 34, 37. If the coating head 32 is held in the tilted attitude shown in FIG. 8 (a), for example, the supply side large flow passage 101 assumes a higher position than the evacuation side large flow passage 105. As a result, the row direction supply flow passage 102 and the row direction evacuation flow passage 104 become tilted downward towards the evacuation side large flow passage 105. Thus, when the coating head 32 is held in the tilted attitude shown in FIG. 8 (a), residual coating material remaining in the interior of the coating head 32 can easily flow from the supply side large flow passage 101 towards the evacuation side large flow passage 105. That is, the amount of residual coating material remaining in the row direction supply flow passage 102 and the row direction evacuation flow passage 104 will be less than the amount of residual coating material remaining in these flow passages in the reference attitude. As a result, the cleaning liquid supplied during cleaning flushes out the residual coating material remaining in the row direction supply flow passage 102 and row direction evacuation flow passage 104 more quickly. Furthermore, the residual coating material remaining inside the nozzle 39 is also pushed out to the outside through the nozzle 39 by the supplied cleaning liquid. As a result, the occurrence of nozzle clogging due to residual coating material (pigment) can be prevented.

Furthermore, if the attitude of the coating head 32 is maintained in the tilted attitude shown in FIG. 8 (b), the liquid evacuation tubes 34, 37 provided in the coating head unit will be held at a higher position than the liquid feed tubes 33, 36. If the coating head 32 is held in the tilted attitude shown in FIG. 8 (b), for example, the evacuation side large flow passage 105 will be at a higher position than the supply side large flow passage 101. As a result, the row direction supply flow passage 102 and the row direction evacuation flow passage 104 will be tilted downward toward the supply side large flow passage 101. Thus, when the coating head 32 is held in the tilted attitude shown in FIG. 8 (b), residual coating material remaining inside the coating head 32 can easily flow from the evacuation side large flow passage 105 towards the supply side large flow passage 101. In this case, coating material is more likely to remain inside the coating head 32. However, when cleaning liquid is supplied to the coating head, it becomes easier for the coating material that is trying to flow from the evacuation side large flow passage 105 towards the supply side large flow passage 101 to mix with the cleaning liquid that is trying to flow from the supply side large flow passage 101 to the evacuation side large flow passage 105. As a result, coating material can mix more readily into the cleaning liquid and thus the residual coating material remaining in the row direction supply flow passage 102 and row direction evacuation flow passage 104 can be flushed out in a relatively short time. It should be noted that the residual coating material remaining in the interior of the nozzle 39 is pushed out to the outside through the nozzle 39 by the supplied cleaning liquid.

Once a set period of time T2 has elapsed after starting the supply of cleaning liquid to the coating head 32, the supply control unit 153 controls the three-way valve 79 to place the flow passage 51k and the bypass flow passage 53 into communication, and at the same time controls the three-way valve 83 to place the flow passage 52a and the bypass flow passage 53 into communication. This causes the cleaning liquid stored in the cleaning tank 91 to flow via the valve portions 95a, 95c of the manifold 95 and the valve portions 77c, 77b of the switching valve 77 and through the supply passage 51 (more specifically, the flow passages 51j, 51k), the bypass flow passage 53, and return flow passage 52 (more specifically, the passages 52a, 52b) in that order, whereby the bypass flow passage 53 is cleaned again. Once a set period of time T3 has elapsed after starting the supply of cleaning liquid to the bypass flow passage 53, the supply control unit 153 switches the valve portion 95a of the manifold 95 to the closed state and stops the driving of the pump 92. This stops the supply of cleaning liquid to the supply passage 51.

At this time, cleaning liquid remains inside the bypass flow passage 53 and the coating head 32. Therefore, the supply control unit 153 switches the valve portion 95b of the manifold 95 to the open state and then drives the compressor 94. This causes air for cleaning to flow via the valve portions 95a, 95c of the manifold 95 and valve portions 77c, 7b of the switching valve 77 and through the supply passage 51 (more specifically, the flow passages 51j, 51k), the bypass flow passage 53, and return flow passage 52 (more specifically, the flow passages 52a, 52b) in that order. At this time, the cleaning liquid remaining in the bypass flow passage 53 is pushed out by the air for cleaning and evacuated via the valve portion 86d of the switching valve 86 into the liquid evacuation tank 97.

Once a set period of time T4 has elapsed after starting the supply of air for cleaning into the bypass flow passage 53, the supply control unit 153 controls the three-way valve 79 to place the flow passage 51k and the flow passage 54 into communication, and at the same time controls the three-way valve 83 to place the flow passage 52a and the flow passage 55 into communication. This causes the air for cleaning to flow via the valve portions 95a, 95c of the manifold 95 and valve portions 77c, 77b of the switching valve 77 and through the supply passage 51 (more specifically, the flow passages 51j, 51k), the flow passage 54, the coating head 32, the flow passage 55, and the return flow passage 52 (more specifically, the flow passages 52a, 52b) in that order. The supply of air for cleaning causes the cleaning liquid remaining inside the coating head 32 to be evacuated via the valve portion 86d of the switching valve 86 to the liquid evacuation tank 97.

Then, once a set period of time T5 has elapsed after starting supply of air for cleaning to the coating head 32, the supply control unit 153 switches the valve portion 95b of the manifold 95 to the closed state and stops the driving of the compressor 94. The supply control unit 153 then switches the valve portion 77a of the switching valve 77 to the open state and the valve portion 77c to the closed state. Furthermore, supply control unit 153 switches the valve portion 86b of the switching valve 86 to the open state and the valve portion 86d to the closed state.

After this processing, the supply control unit 153 outputs a cleaning end signal to the main control unit 151. In response, the main control unit 151 outputs an attitude change command to the arm control unit 152. As a result, the arm control unit 152 actuates the robot arm 15 to change the attitude of the coating head 32 from the tilted attitude to the reference attitude, and cleaning of the other segments is performed.

It should be noted that, during cleaning of the coating head 32, the time periods T1, T2, T3 for which cleaning liquid is supplied may all be the same time period or may all be different time periods. Furthermore, time period T1 and time period T3 may be made the same, or time period T1 and time period T2 may be made the same. Moreover, the time periods T4 and T5 for supplying air for cleaning may be the same time period or different time periods.

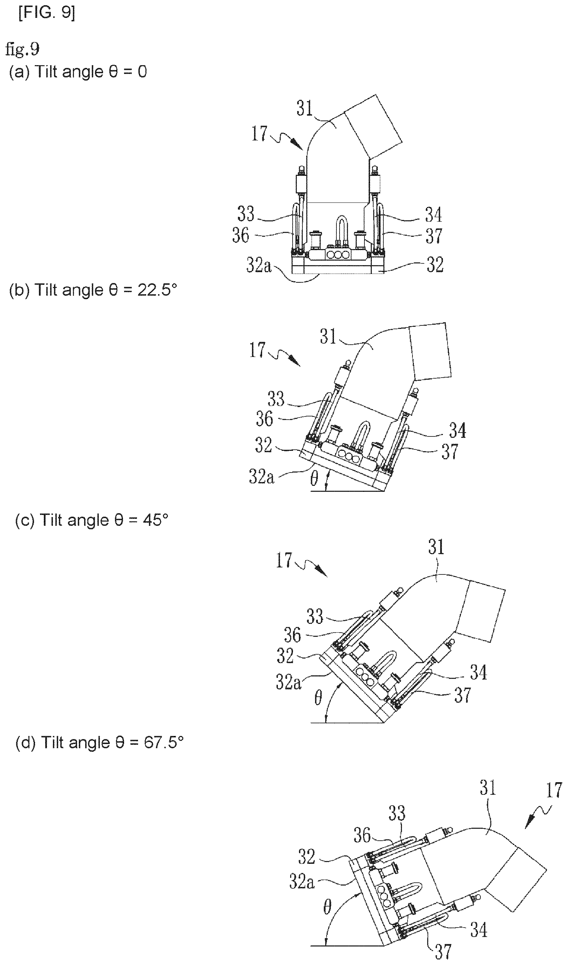

Next, the measurement results for light transmittance of the supplied cleaning liquid after cleaning of the coating head 32 will be described. It will be noted that light transmittance represents the percentage of light that an object allows to pass through. In the present embodiment, light transmittance is measured for cleaning liquid that has flowed through the interior of the coating head 32. Thus, a higher light transmittance makes it possible to determine that the cleaning liquid is not contaminated, namely, that the cleaning liquid does not contain residual coating material from inside the coating head 32. As shown in FIG. 9 (a), when the coating head 32 was cleaned while maintaining the attitude of the coating head 32 in the reference attitude, the light transmittance of the supplied cleaning liquid after the cleaning of the coating head 32 was, for example, 72.6%. It will be noted that a higher value of light transmittance indicates greater transparency and less contamination.

On the other hand, the light transmittance of the cleaning liquid after cleaning was performed with the attitude of the coating head 32 being a tilted attitude was as follows. As shown in FIG. 9 (b), for example, when the tilt angle θ was 22.5°, the light transmittance was, for example, 73.4%. Furthermore, as shown in FIG. 9 (c), for example, at a tilt angle θ of 45°, the light transmittance was, for example, 88.9%. Furthermore, as shown in FIG. 9 (d), for example, at a tilt angle θ of 67.5°, the light transmittance was, for example, 92.0%.

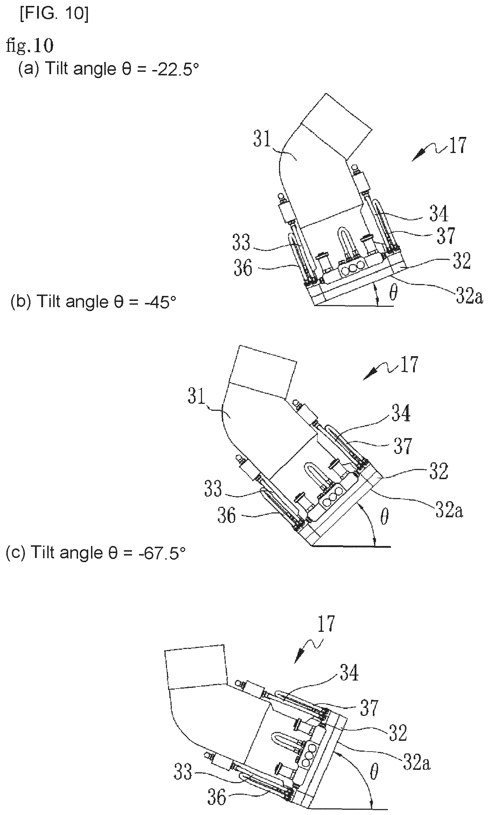

Moreover, as shown in FIG. 10 (a), for example, at a tilt angle θ of -22.5°, the light transmittance was, for example, 78.6%. Furthermore, as shown in FIG. 10 (b), for example, at a tilt angle θ of -45°, the light transmittance was, for example, 85.2%. Furthermore, shown in FIG. 10 (c), for example, at a tilt angle θ of -67.5°, the light transmittance was, for example, 90.6%.

According to this, it can be seen that, for example, when cleaning of the coating head 32 was performed in a state where the coating head 32 was tilted in either direction A in FIG. 8 (a) or direction B in FIG. 8 (b) within a range of absolute values |θ| of the tilt angle θ of 22.5 to 67.5°, the light transmittance was higher than when the coating head 32 was cleaned in the reference attitude.

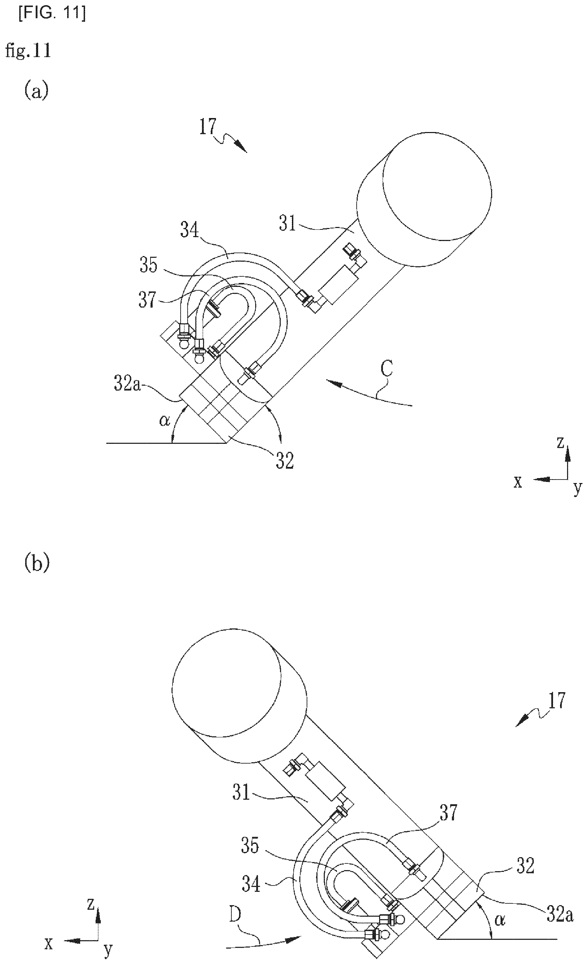

In the above-described embodiment, the tilted attitude of the coating head 32 was described by presenting, as an example, an attitude in which the coating head was tilted by a predetermined tilt angle θ with the short direction of the nozzle forming surface 32a of the coating head 32 (the x direction in FIG. 2 (a)) as the direction of the axis of rotation. However, the coating head 32 can be cleaned using, as the tilted attitude of the coating head 32, not only a tilted attitude in which the coating head is tilted by a predetermined angle θ with the short direction of the nozzle forming surface 32a of the coating head 32 as the direction of the axis of rotation, but also a tilted attitude in which the coating head is tilted by a predetermined angle α with the long direction (the y direction in FIG. 2) of the nozzle forming surface 32a of the coating head 32 as the direction of the axis of rotation (an attitude as shown in FIG. 11 (a) or FIG. 11 (b)).

In the above embodiment, the coating head 32 is cleaned while being maintained in a tilted attitude in which the coating head is tilted by a predetermined angle θ with the short direction of the nozzle forming surface 32a of the coating head 32 (the x direction in FIG. 2 (a)) as the direction of the axis of rotation. However, it is also possible to perform cleaning of the coating head 32 while changing the tilt angle θ of the nozzle forming surface 32a of the coating head 32 within a predetermined range (e.g., in the range of 70° to -70°), i.e., while changing (fluctuating) the attitude of coating head 32 between the attitude shown in FIG. 9 (d) and the attitude shown in FIG. 10 (c). Note that the attitude from which attitude change of the coating head 32 is started may be the reference attitude or another attitude. In this case, the attitude of the coating head 32 may be varied at a constant rate or at different rates. Furthermore, when changing the attitude of the coating head 32, the range of tilt angles θ of the nozzle forming surface 32a of the coating head 32 may be a constant angular range or may be varied from cycle to cycle.

If the long direction (the y-direction in FIG. 2 (b)) of the nozzle forming surface 32a of the coating head 32 is used as the direction of the axis of rotation, it is also possible to perform cleaning of the coating head 32, for example, while changing the tilting angle α within a predetermined range (e.g., in the range of 45° to -45°), i.e., while changing (fluctuating) the attitude between the attitude shown in FIG. 11 (a) and the attitude shown in FIG. 11 (b). Note that the attitude from which attitude change of the coating head 32 is started may be the reference attitude or another attitude. In this case as well, the attitude of the coating head 32 may be varied at a constant rate or at different rates. Furthermore, when changing the attitude of the coating head 32, the range of tilt angles α of the nozzle forming surface 32a of the coating head 32 may be a constant angular range or may be varied from cycle to cycle.

In addition, rather that changing the attitude of the coating head 32 by changing one of the tilt angle θ or the tilt angle α, it is also possible to perform two-directional changing that combines change of the tilt angle θ with change of the tilt angle α.

Furthermore, rather than performing cleaning while maintaining the attitude of the coating head 32 in a tilted attitude as shown in FIG. 8 or FIG. 11, it is also possible to perform cleaning while moving the coating head in a circular or elliptical motion in a specified plane. In this case, the specified plane may be, for example, a plane parallel to the floor surface 300 (the xy plane shown in FIG. 2) or may be a plane intersecting the floor surface 300. It should be noted that, instead of performing circular or elliptical motion in a particular plane, it is also possible to perform reciprocating motion in at least one of the x-direction, the y-direction, or the z-direction. It should be noted that, when reciprocating motion is performed, the amplitude of a single reciprocating motion may be constant, or the amplitude may be changed for each reciprocating motion.

Performing such movement (circulation motion, elliptical motion, reciprocating motion, etc.) of the coating head 32 held in a specified attitude causes the coating head 32 to vibrate and agitates the cleaning liquid supplied to the coating head 32 inside the flow passages within the coating head 32. As a result, the residual coating material remaining in the flow passages inside the coating head 32 can be more easily mixed with the cleaning liquid and evacuated into the liquid evacuation tank 97.

It should be noted that instead of moving the coating head 32 maintained in a tilted attitude, it is also possible to vibrate the coating head 32. Vibration of the coating head 32 may involve inducing vibration of the entire robot arm 15 holding the coating head unit 17 by means of a vibration imparting means (not illustrated) incorporated into the robot arm 15, or may involve vibrating only the coating head 32 incorporated into the coating head unit 17.

In the above embodiment, it was not stated that the head control unit 154 applies a signal to the individual electrodes 114 of the piezoelectric substrate 111 during cleaning of the coating head 32 held in a tilted attitude. However, whether or not a signal is to be applied to the individual electrodes 114 of the piezoelectric substrate 111 is a matter that can be selected as appropriate at one's discretion. As described above, the piezoelectric ceramic layer 112b undergoes displacement when a signal is applied to an individual electrode 114 of the piezoelectric substrate 111. Therefore, during cleaning of the coating head 32, for example, applying a signal to an individual electrode 114 of the piezoelectric substrate 111 will cause the cleaning fluid flowing through the nozzle pressurization chamber 103 to vibrate, leading to fluctuations in the flow of the cleaning liquid. These fluctuations make it easier for residual coating material remaining in the nozzle pressurization chamber 103 to be mixed into the cleaning liquid. As a result, the efficiency of cleaning of the coating head 32 is improved.

It should be noted that during coating with the coating head 32, the operation in which the head control unit 154 applies a signal to an individual electrode 114 of the piezoelectric substrate 111 can be utilized during cleaning of the coating head 32 in the case where the coating head 32 is maintained in a tilted attitude, or in the case where the coating head 32 is vibrated, or in the case where the attitude of the coating head 32 is varied, or in the case where circular motion or elliptical motion is performed in a particular plane.

In the above-described embodiment, the coating material supply device 40 sampled the cleaning liquid after cleaning of the coating head 32 and measured the light transmittance of the cleaning liquid, but it is also possible to provide the coating material supply device 40 with a detection means (state detection means) for detecting the state of the cleaning liquid, such as the light transmittance of the cleaning liquid after cleaning of the coating head 32 or the proportion of coating material (pigment) contained in the cleaning liquid. In this case, the light transmittance of the cleaning liquid that was used for cleaning of the coating head 32 is detected by the detection means, and a resulting detection signal is outputted to the supply control unit (condition setting unit) 153. Based on the detection signal, the supply control unit 153 changes the tilt angle θ of the coating head 32, or sets the cleaning conditions for cleaning of the coating head 32, such as the supply time and supply pressure of the cleaning liquid and the air for cleaning. It should be noted that the cleaning conditions for cleaning of the coating head 32, such as the tilt angle θ of the coating head 32, the supply time and supply pressure of cleaning liquid and air for cleaning, etc., may be set to differ depending on the type of coating material used.

While residual coating material remaining in the flow passage inside the coating head 32 is cleaned out by supplying cleaning liquid to the coating head 32, it is also possible to clean out the residual coating material remaining in the flow passages inside the coating head 32 by supplying cleaning liquid containing fine bubbles such as nanobubbles and microbubbles to the coating head 32. In this case, a bubble generator is positioned between the pump 92 and the manifold 95 shown in FIG. 3 to cause fine bubbles such as nanobubbles and microbubbles to be generated by the bubble generator in the cleaning liquid fed out from the pump 92 towards the manifold 95. A cleaning liquid containing fine bubbles, such as nanobubbles and microbubbles, is supplied to the interior of the coating head 32 via the manifold 95. Cleaning liquid containing fine bubbles, such as nanobubbles and microbubbles, more effectively removes residual coating material that remains in the flow passages inside the coating head 32.

### [Effects]

The coating machine of the present invention is a coating machine 10 comprising an inkjet type coating head 32 having a nozzle forming surface 32a on which a plurality of nozzles 39 for ejecting coating material are provided, the coating machine comprising: a robot arm 15 comprising a plurality of arm members at least including an arm member 23 that holds the coating head 32; an arm control unit 152 that controls the position and attitude of the coating head 32 by driving the robot arm 15; a supply passage 51 for supplying coating material to the coating head 32; a gear pump 61 that supplies cleaning liquid to the coating head 32 via the supply passage 51; and a supply control unit 153 that controls the gear pump 61, wherein the arm control unit 152 controls the driving of the robot arm 15 during cleaning of the coating head 32 so as to change the attitude of the coating head 32 from a specified attitude to a tilted attitude in which the nozzle forming surface 32a is tilted relative to the horizontal plane, and the supply control unit 153 drives the gear pump 61 to supply cleaning liquid to the supply passage 51 in a state where the attitude of the coating head 32 has been changed.

Among currently employed methods of cleaning a coating head, the method is often employed wherein the ejection surface of the coating head is maintained parallel to the horizontal plane, a cleaning liquid is supplied to the coating head, and the cleaning liquid is discharged through the individual nozzles formed on the ejection surface of the coating head to perform cleaning. With such a cleaning method, because the ejection surface of the coating head is the lowest end, the cleaning liquid that cleans the interior of the coating head pushes the residual coating material remaining in the interior of the coating head towards each of the plurality of nozzles provided on the ejection surface. In this case, coating material (pigment) can readily stagnate or adhere (precipitate) onto the wall surfaces in the vicinity of the inner circumferential surface of the flow passages and in the curved portion of the flow passages inside the coating head. It can take time for such stagnation of coating material and adhesion of pigment to be flushed away with cleaning liquid. Therefore, it is difficult to flush out residual coating material remaining inside the coating head, for example, in the time period from the end of coating of a vehicle body until the start of coating of the next vehicle body.

In the present invention, when cleaning the coating head 32, the attitude of the coating head 32 is changed from a state in which the nozzle forming surface 32a of the coating head 32 is parallel to the floor surface 300, which constitutes a horizontal plane, to a state tilted by a predetermined angle θ relative to the floor surface 300. For example, if the attitude of the coating head 32 is changed, the residual coating material (pigment) remaining inside the coating head 32 assumes a state corresponding to the tilted attitude of the coating head, i.e. flows more readily flow towards the lowest point when the coating head is tilted.

In this state, when cleaning is performed by supplying cleaning liquid to the coating head 32, the cleaning liquid can more easily push out residual coating material remaining in the interior of the coating head 32 as compared to the case of cleaning in a state where the nozzle forming surface 32a of the coating head 32 is parallel to the floor surface 300. Furthermore, residual coating material that remains inside the coating head 32 can be more easily mixed into the cleaning liquid. As a result, the residual coating material remaining inside the coating head 32 can be flushed out in a shorter time than with conventional cleaning methods. Furthermore, since flushing can be performed in a shorter time than with conventional cleaning methods, the amount of cleaning liquid used during cleaning can be reduced. In addition, since cleaning of the coating head 32 can be performed in a shorter time than with conventional cleaning methods, the coating efficiency can be improved in cases where coating of the vehicle body 200 is carried out while performing color change operations.

In addition, there is a coating material tank 41 in which coating material is stored and a return flow passage 52 for returning, to the coating material tank 41, coating material supplied to the coating head 32 that was not ejected from the plurality of nozzles 39, wherein the supply passage 51 is provided on one end side in one direction of the nozzle forming surface 32a, wherein the return flow passage 52 is provided on the other end side in one direction of the nozzle forming surface 32a, and wherein the arm control unit 152 controls the driving of the robot arm 15 to change the attitude of the coating head 32 so as to tilt the nozzle forming surface 32a downward from one end side in one direction of the nozzle forming surface 32a towards the other end side.

With regard to the coating head 32, in this case, the attitude of the coating head 32 is changed such that the nozzle forming surface 32a of the coating head 32 is tilted downward from one end side in one direction of the nozzle forming surface 32a (the one end side where the supply passage 51 is provided) to the other end side (the other end side where the return flow passage 52 is provided). This change in attitude allows residual coating material to flow more easily from the supply passage 51 towards the return flow passage 52 within the coating head 32. As a result, when cleaning liquid is supplied to the coating head 32, the residual coating material remaining inside the coating head 32 can be more easily pushed by the supplied cleaning liquid toward the return flow passage 52. As a result, the time needed for flushing out residual coating material remaining in the coating head 32 can be shortened.

Furthermore, arm control unit 152 controls the driving of the robot arm 15 to maintain the attitude of the coating head 32 in a state where the nozzle forming surface 32a of the coating head 32 is tilted relative to the horizontal plane.

In the present invention, when cleaning the coating head 32, the attitude of the coating head 32 is changed from a state in which the nozzle forming surface 32a of the coating head 32 is parallel to the floor surface 300, which constitutes a horizontal plane, to a state tilted by a predetermined angle θ relative to the floor surface 300, and is maintained in that state. In this state, the residual coating material (pigment) remaining in the interior of the coating head 32 can more easily flow in the direction corresponding to the attitude of the coating head 32 with the changed attitude. Therefore, when cleaning is performed by supplying cleaning liquid to the coating head 32, the cleaning liquid can more easily push out residual coating material remaining in the interior of the coating head 32 as compared to the case of cleaning in a state where the nozzle forming surface 32a of the coating head 32 is parallel to the floor surface 300. As a result, the residual coating material remaining inside the coating head 32 can be flushed out in a shorter time than with conventional cleaning methods.

Furthermore, arm control unit 152 controls the driving of the robot arm 15 to continuously change the angle at which the nozzle forming surface 32a of the coating head 32 is tilted relative to the horizontal plane during cleaning of the coating head 32.

Furthermore, the arm control unit 152 controls the driving of the robot arm 15 to rotate the coating head 32 about a central axis extending in a first direction contained in a plane parallel to the horizontal plane, and to rotate the coating head 32 about a central axis extending in a second direction contained in a plane parallel to the horizontal plane and orthogonal to the first direction, so as to continuously change the angle at which the nozzle forming surface 32a of the coating head 32 is tilted relative to the horizontal plane.

Accordingly, the centrifugal force acting on the coating head 32 as the attitude of the coating head 32 continuously changes makes it easier for the residual coating material remaining in the interior of the coating head 32 to be mixed into the cleaning liquid supplied to the interior of the coating head 32, thereby making it easier for the residual coating material remaining in the interior of the coating head 32 to be flushed out. This improves the efficiency of cleaning of the coating head 32 and also allows for a shorter cleaning time for the coating head 32.

In addition, there is provided a vibration imparting means that imparts vibration to the coating head 32, wherein the vibration control unit drives the vibration imparting means in response to the supply of cleaning liquid to the coating head 32 being started.

Accordingly, the vibration imparted to the coating head 32 during the supply of cleaning liquid makes it easier for the pigment adhering to the inner walls of the flow passages inside the coating head 32 to peel off. Furthermore, the vibration acting on the coating head 32 makes it easier for the residual coating material remaining in the interior of the coating head 32 to be mixed into the cleaning liquid supplied to the interior of the coating head 32, thereby making it easier for the residual coating material remaining in the interior of the coating head 32 to be flushed out. As a result, the efficiency of cleaning of the coating head 32 can be improved and the cleaning time for the coating head can be shortened.

In addition, there is a provided a state detection means disposed in the return flow passage 52 for detecting the state of the cleaning liquid that has flowed through the coating head 32, and a condition setting unit that sets cleaning conditions, including the attitude of the coating head 32 during cleaning of the coating head 32 and the supply time of the cleaning liquid supplied to the coating head 32, based on the detection results of the state detection means.

Accordingly, by detecting the state of the cleaning liquid after cleaning of the coating head 32, the state of cleaning can be ascertained, making it possible to perform cleaning in accordance with the coating material used, for example, by setting (changing) the time for supplying cleaning liquid or the attitude of the coating head 32 during cleaning, as appropriate.

### [Description of reference symbols]

- 10: Coating machine
- 15: Robot arm
- 32: Coating head
- 32a: Nozzle forming surface
- 41: Coating material tank
- 51: Supply passage
- 52: Return flow passage
- 152: Arm control unit
- 153: Supply control unit

## Claims

1. A coating machine comprising an inkjet type coating head having an ejection surface on which a plurality of nozzles for ejecting coating material are provided, the coating machine being **characterized in that** it comprises:
a robot arm comprising a plurality of arm members at least including an arm member that holds the coating head;
an arm control unit that controls position or attitude of the coating head by driving the robot arm; and
a supply passage for supplying coating material to the coating head;
a cleaning liquid supply unit which supplies cleaning liquid to the coating head via the supply passage; and
a cleaning control unit which controls the cleaning liquid supply unit;
wherein
the arm control unit controls the driving of the robot arm during cleaning of the coating head to change the attitude of the coating head from a specified attitude to a tilted attitude in which the ejection surface is tilted relative to a horizontal plane; and
the cleaning control unit drives the cleaning liquid supply unit to supply the cleaning liquid to the supply passage in a state where the attitude of the coating head has changed.

2. The coating machine as set forth in claim 1, **characterized in that** it comprises:
a reservoir unit in which the coating material is stored; and
a return flow passage for returning, to the reservoir unit, coating material supplied to the coating head that was not ejected from the plurality of nozzles;
wherein
the supply passage is provided on one end side in one direction of the ejection surface;
the return flow passage is provided on the other end side in one direction of the ejection surface; and
the arm control unit controls the driving of the robot arm to change the attitude of the coating head so as to tilt the ejection surface downward from one end side to the other side in one direction of the ejection surface.

3. The coating machine as set forth in claim 1 or claim 2, **characterized in that**
the arm control unit controls the driving of the robot arm to maintain the attitude of the coating head in a state where the ejection surface of the coating head is tilted relative to the horizontal plane.

4. The coating machine as set forth in any of the preceding claims,
**characterized in that**
the arm control unit controls the driving of the robot arm to continuously change the angle at which the ejection surface of the coating head is tilted relative to the horizontal plane during cleaning of the coating head.

5. The coating machine as set forth in any of the preceding claims,
**characterized in that**
the arm control unit controls the driving of the robot arm to rotate the coating head about a central axis extending in a first direction contained in a plane parallel to the horizontal plane, and to rotate the coating head about a central axis extending in a second direction contained in a plane parallel to the horizontal plane and orthogonal to the first direction, so as to continuously change the angle at which the ejection surface of the coating head is tilted relative to the horizontal plane.

6. The coating machine as set forth in any of the preceding claims, **characterized in that**
a vibration imparting means for imparting vibration to the coating head; and
a vibration control unit which drives the vibration imparting means;
wherein
the vibration control unit drives the vibration imparting means in response to supply of the cleaning liquid to the coating head being started.

7. The coating machine as set forth in any of the preceding claims,
**characterized in that** it comprises:
a state detection means provided in the return flow passage for detecting a state of the cleaning liquid flowing through the coating head; and
a condition setting unit for setting cleaning conditions, including attitude of the coating head during cleaning of the coating head and supply time of the cleaning liquid to be supplied to the coating head, based on a detection result of the state detection means.
